Europäisches Patentamt

European Patent Office

Office européen des brevets

(11) Veröffentlichungsnummer: **0 489 350 A1**

# EUROPÄISCHE PATENTANMELDUNG

(21) Anmeldenummer: **91120330.5**

(22) Anmeldetag: **27.11.91**

(51) Int. Cl.5: **G01D 5/249**, G01B 7/02, G01D 5/20

(30) Priorität: **03.12.90 DE 4038515**

(43) Veröffentlichungstag der Anmeldung:
**10.06.92 Patentblatt 92/24**

(84) Benannte Vertragsstaaten:
**DE ES FR GB IT SE**

(71) Anmelder: **VOGT electronic Aktiengesellschaft Erlautal 7 W-8391 Erlau/Passau(DE)**
Anmelder: **Bayerische Motoren Werke Aktiengesellschaft Patentabteilung AJ-3 Postfach 40 02 40 Petuelring 130 W-8000 München 40(DE)**

(72) Erfinder: **Hartmann, Uwe**

**Verstorben(DE)**
Erfinder: **Mai, Udo**
**O.-Berneder Ring 7**
**W-8391 Untergriesbach(DE)**
Erfinder: **Flechtner, Horst**
**Daxenäckerweg 20**
**W-8046 Garching(DE)**
Erfinder: **Drews, Reinhard, Dr.**
**Ahornweg 15**
**W-8067 Petershausen(DE)**

(74) Vertreter: **Hieke, Kurt**
**Stadlerstrasse 3**
**W-8013 Haar bei München(DE)**

(54) Einrichtung zur statischen und/oder dynamischen Längen- und/oder Winkelmessung.

(57) Es wird eine Einrichtung zum statischen und/oder dynamischen, kontaktfreien, elektrischen Messen der augenblicklichen Längs- und/oder Winkelposition, die zwei gegeneinander bewegbare Körper in Bezug aufeinander einnehmen, vorgeschlagen. Die Einrichtung ist robust und verschmutzungsunempfindlich, liefert in einem großen Temperaturbereich auch bei hoher Temperatur genaue Meßergebnisse in digitaler Form und läßt in weiten Grenzen mechanische Toleranzen zu. Dies wird dadurch erreicht, daß mit dem einen Körper eine elektromagnetisch dämpfendes Material aufweisende, nach Art eines einschrittigen Binärcodes gestaltete Skala mit mehreren Code-Spuren und mit dem anderen Körper für jede Code-Spur dieser gegenüber eine Abtastspule fest verbunden ist, die zu einem von dämpfenden Abschnitten der Code-Spur bedämpfbaren Resonanzkreis gehört, und eine Schaltungsanordnung vorgesehen ist, in der die Schwingungsamplituden an den Abtastspulen zur Darstellung der Bitwerte herangezogen werden.

Fig. 3

Die Erfindung bezieht sich auf eine Einrichtung zu dem im Oberbegriff des Patentanspruchs 1 angegebenen Zweck.

Die der Erfindung zugrundeliegende Aufgabe besteht darin eine Einrichtung dieser Art zu schaffen, die robust und verschmutzungsunempfindlich ist und in einem großen Temperaturbereich auch bei hoher Temperatur an der Meßstelle zuverlässig genaue Meßergebnisse in Form eines Absolutwertes der gemessenen Größe in digitaler Form zur seriellen oder parallelen Datenausgabe zu liefern vermag.

Zudem soll die Einrichtung mechanische Toleranzen in weiten Grenzen ohne wesentlichen Einfluß auf die Meßgenauigkeit zulassen.

Die vorstehende Aufgabe wird durch die im Patentanspruch 1 genannten Merkmale gelöst.

Das erfindungsgemäße induktiv-digitale Meßsystem zeichnet sich dadurch aus, daß es auch bei hoher Temperatur zuverlässig arbeitet und unempfindlich gegen Verschmutzung und die Umgebungsbedingungen an der Meßstelle, insbesondere auch gegen Temperaturschwankungen, ist. Das Meßprinzip basiert auf der Funktion eines Näherungsschalters. Es wird eine der Anzahl von Bits des Bitwortes entsprechende Anzahl von Abtastoszillatoren verwendet, z.B. für neun Bits neun Abtast-Oszillatoren, deren (neun) Schwingkreise in ihrer Amplitude durch Dämpfung bzw. Nichtdämpfung von den Codespuren her beeinflußt werden.

Die erfindungsgemäße Einrichtung eignet sich z.B. zur Feststellung der augenblicklichen Winkelposition der Kurbelwelle in einem Motor bezüglich des Motorblocks, zur Überwachung der Längsposition der Laufkatze eines Krans bezüglich des Auslegers oder zur Kontrolle des Abstandes der Karrosserie zur Fahrzeugachse für eine Niveauregulierung in Kraftfahrzeugen oder dergleichen mehr.

Um in einem großen Temperaturbereich mit der erfindungsgemäßen Einrichtung besonders sichere Meßergebnisse zu erhalten und auch sonstige negative Einflüsse von Umgebungsbedingungen auf das Meßergebnis optimal auszuschliessen, wird als bedeutende Weiterbildung der Erfindung gemäß Anspruch 2 ein zusätzlicher Referenz-Oszillator vorgesehen, der mit den Abtast-Oszillatoren ggf. bis auf den Kondensator baugleich und räumlich so angeordnet ist, daß er den gleichen Umgebungsbedingungen ausgesetzt ist wie die Abtast-Oszillatoren, wobei die Amplitude der Schwingung des Referenzoszillators mittels einer Regelschaltung auf einem vorbestimmten Wert gehalten wird und die Regelgröße der Regelschaltung zwecks Eleminierung des Einflusses der Umgebungsbedingungen auf die Amplitude der Abtast-Oszillatoren zur entsprechenden Steuerung dieser Amplitude herangezogen wird.

Der weitere Referenzoszillator bleibt immer unbedämpft. Da alle Oszillatoren baugleich sind, werden ihre Ausgangsspannungen -ausgenommen gegen die Codespurdämpfung- mittels des zusätzlichen Referenz-Oszillators gegen die Umwelteinflüsse stabil gehalten. Der hohe Temperaturbereich und die große Meßgenauigkeit in diesem werden also dadurch sichergestellt, daß eine immer binär ungedämpfte Referenzoszillatorspannung mit den von den Codespuren beeinflußten Spannungen der Abtast-Oszillatoren verglichen wird.

Es ist ohne weiteres möglich, den Sensorenaufbau wegen der EMV sehr kompakt zu halten und die Abtastspulen in Spulengruppen kleiner Abmessungen unterzubringen.

Die weiteren Unteransprüche betreffen weitere vorteilhafte Ausgestaltungen des Gegenstandes des Hauptanspruchs.

Die Erfindung wird nachstehend anhand der Zeichnung an Ausführungsbeispielen noch näher erläutert.

In der Zeichnung zeigt:

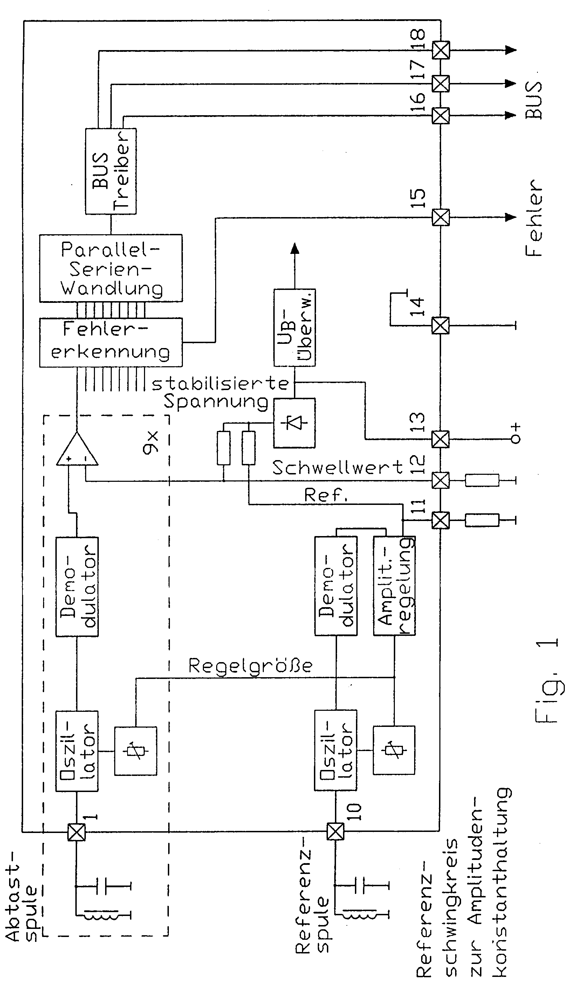

Fig. 1    das Blockschaltbild eines bevorzugten Aufbaues der elektrischen Schaltung bei einer erfindungsgemäßen Meßeinrichtung,

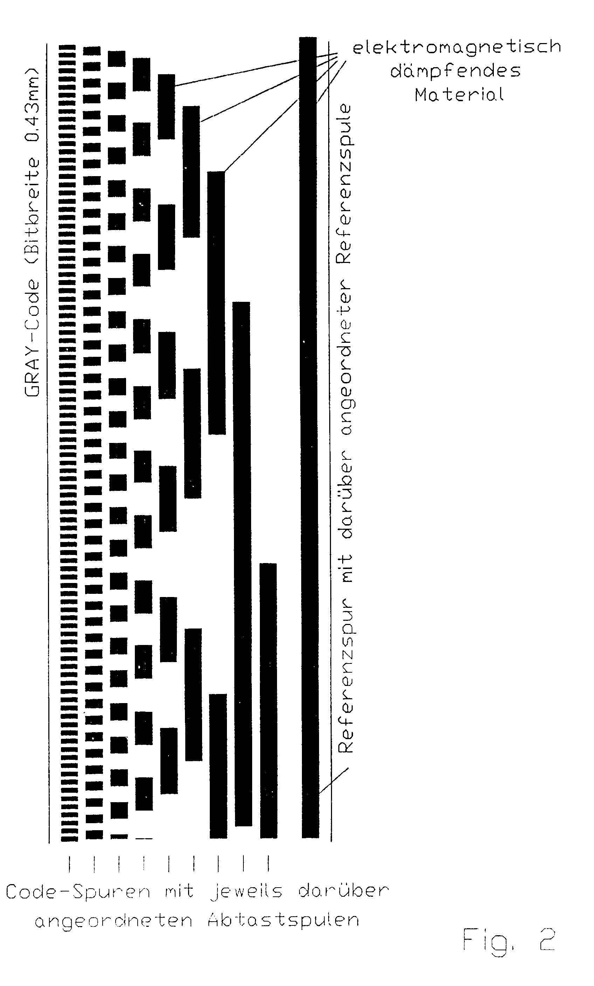

Fig. 2    eine bevorzugte Ausführung der Skala und der zugehörigen Abtastspulenanordnung bei einer erfindungsgemäßen Meßeinrichtung zur Durchführung einer Längenmessung, wobei die Skala dem nicht dargestellten einen Körper, z.B. einer Fahrzeugachse, und die Abtastspulenanordnung mit dem nicht dargestellten anderen Körper, z.B. einer Fahrzeugkarosserie, starr verbunden ist, und

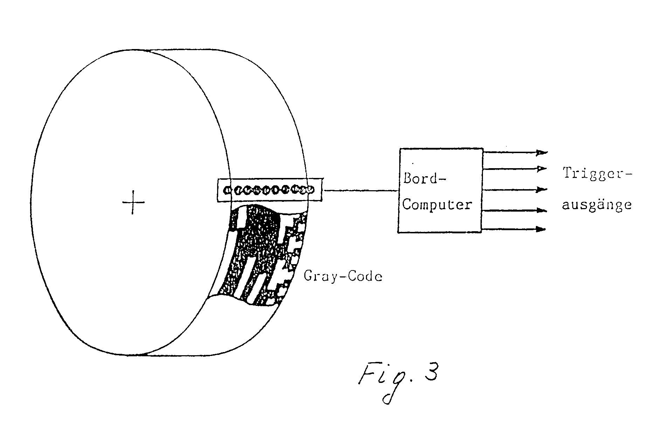

Fig. 3    eine bevorzugte Ausführung der Skala und der zugehörigen Abtastspulenanordnung bei einer erfindungsgemäßen Meßeinrichtung zur Durchführung einer Winkelmessung, wobei die Skala mit dem nicht dargestellten einen Körper, z.B. der Kurbelwelle eines Fahrzeugmotors, und die Abtastspulenanordnung mit dem anderen Körper, z.B. dem Motorblock, starr verbunden ist.

Die Aufgabe, einen robusten, beliebige Längen oder Winkel hochgenau auch bei hoher Arbeitstemperatur an der Meßstelle messenden Absolutwertgeber zu erstellen, wird bei der erfindungsgemäßen Meßeinrichtung durch die Verwendung induktiver Näherungsschalter, die einen einschrittigen Binärcode abtasten, verwirklicht.

Die einzelnen Näherungsschalter umfassen für jedes Bit eine Abtastspule und sind vorzugsweise mit einem IC aufgebaut, das eine Abtast- Oszillatorschaltung, einen Demodulator und einen Schwellwertschalter enthält. Jeder Abtast-Oszillator treibt jeweils einen die Abtastspule und einen Kondensator aufweisenden externen Schwingkreis, dessen Spannung durch den Demodulator gleichgerichtet, durch den Schwellwertschalter in ein High- oder Lowsignal gewandelt und an einem Ausgang zur Verfügung gestellt wird.

Wichtigstes Teil des Näherungsschalters ist die Abtastspule, die mit dem Kondensator den Parallelschwingkreis bildet. Oszillatorschaltung und Schwingkreis erzeugen eine Wechselspannung, deren Frequenz durch den Schwingkreis bestimmt wird. Die Amplitude der Spannung wird durch die jeweilige Abtastoszillatorschaltung des IC und die Güte des Schwingkreises bestimmt. Nimmt man an, daß die Oszillatorschaltung konstant ist, wird die Amplitude hauptsächlich durch die Spule bestimmt, da die Verluste des Kondensators im Vergleich zur Spule sehr gering sind.

Wird ein Metallteil in das Streufeld der Abtastspule gebracht, so entstehen in dem Metall Wirbelströme, die ihrerseits Magnetfelder erzeugen, deren Flußrichtung dem erzeugenden Feld entgegengesetzt ist. Dadurch wird die Güte der Spule reduziert, und die Amplitude der Wechselspannung verringert sich. Diese Spannungsänderung wird über den Demodulator, der eine dem Spitzenwert der Wechselspannung proportionale Gleichspannung erzeugt, an einen als Schwellwertschalter arbeitenden Komparator geführt. Unterschreitet die der Wechselspannung proportionale Gleichspannung einen bestimmten Referenzwert, so schaltet der Komparatorausgang auf Lowsignal bzw. auf Highsignal bei invertiertem Ausgang. Es steht somit eine eindeutige, digitale Information über die Bedämpfung der Spule zur Verfügung.

Wird gemäß der Erfindung für die Bedämpfung der Abtastspule eine in der Längeneinheit geeichte, abwechselnd aus metallisch leitenden und nichtleitenden Flächen bestehende Spur verwendet, läßt sich ein Inkrementalgeber verwirklichen. Ein Absolutgeber läßt sich erfindungsgemäß realisieren, indem mehrere Näherungsschalter mehrere, einen digitalen Code bildende Spuren abtasten. Hier haben sich einschrittige Codes, besonders der Gray-Code, bewährt. Zum einen sind die zu detektierenden Metallflächen größer (die kleinste Metallfläche entspricht zwei Bit), zum anderen kann durch die Tatsache, daß sich pro Zahlübergang immer nur ein Bit ändert, eine leichte Fehlerüberwachung durch einen nachfolgenden Rechner verwirklicht werden, in dem geprüft wird, ob sich tatsächlich nur ein Bit geändert hat.

Eine Längenmessung läßt sich durchführen, indem die Code-Spuren auf eine ebene Fläche aufgebracht (Fig.2) und von den Näherungsschaltern abgetastet werden. Winkelmessungen lassen sich mit den gleichen Näherungsschaltern durchführen, nur sind in diesem Fall die Code-Spuren auf dem Umfang einer kreisförmigen Scheibe (Fig.3) aufgebracht.

Beim Bit mit der niedrigsten Wertigkeit wird die Abtastspule, wenn sie über einem dem einen Bitwert zugeordneten magnetisch neutralen Codespurabschnitt steht, von beiden Seiten her von den sich dort beiderseits nahe daneben befindenden Codespurabschitten aus dem elektromagnetisch dämpfenden Matarial etwas bedämpft, die dem anderen Bitwert zugeordnet sind. Um entsprechende Verhältnisse auch für die Bits höherer Wertigkeit zu schaffen, wird vorzugsweise die Länge der elektromagnetisch neutralen Bitabschnitte bei den Bits höherer Wertigkeit um einen Bruchteil der Länge, die diese Bitabschnitte bei den Bits von der niedrigsten Wertgkeit aufweisen, gegenüber der normalen, sich aus der Codierung allein ergebenden Länge verkürzt.

Zur Eliminierung jeglichen störenden Übersprechens zwischen den Abtastspulen werden die aus diesen und den Kondensatoren bestehenden Schwingkreise vorzugsweise auf etwas unterschiedliche Resonanzfrequenzen abgestimmt. Dies hat die Wirkung, daß jede Abtastspule von einer anderen nur ein Signal von gegenüber ihrer eigenen Oszillatorfrequenz unterschiedlicher Frequenz überhaupt empfangen kann, sodaß schon aus diesem Grunde ihre eigene Oszillatorfrequenz hiervon nicht wesentlich beeinflußbar ist.

Bei der Schaltung nach Fig. 1 wird der Schwellwert aus einer stabilisierten Spannung gebildet. Eine andere Möglichkeit ist im Patentanspruch 12 angegeben.

## Patentansprüche

1. Einrichtung zum statischen und/oder dynamischen, kontaktfreien, elektrischen Messen der augenblicklichen Längs-und oder Winkelposition, die zwei gegeneinander bewegbare Körper in Bezug aufeinander einnehmen, **dadurch gekennzeichnet**, daß

a) mit dem einen Körper eine Skala fest verbunden ist, die unter Verwendung von elektromagnetisch dämpfendem Material nach Art eines einschrittigen Binärcodes so gestaltet ist, daß jeder Längen- und/oder Winkeleinheit ein Binärwort zugeordnet ist, dessen Bits Codeelemente entsprechen, die für den einen Bit-Wert aus dem elektromagnetisch dämpfenden Material bestehen und für den anderen Bit-Wert elektromagnetisch neutral sind und die auf mindestens einer Code-Spur angeordnet sind, die sich in derjenigen Richtung erstreckt, in der die Relativposition der Körper veränderbar ist, und

b) mit dem anderen Körper für jede Code-Spur der Skala mindestens eine dieser gegenüberstehende Abtastspule für die Codeelemente fest verbunden ist, die mit einem ihr zugeordneten Kondensator einen die Frequenz eines Abtastoszillators bestimmenden Resonanzkreis bildet, dessen Schwingamplitude durch die dämpfenden Abschnitte der Codeelemente verringert wird, und
c) eine Schaltungsanordnung vorgesehen ist, in der die an den Abtastspulen auftretenden unterschiedlichen Schwingungsamplituden zur elektrischen Darstellung der entsprechenden Bitwerte herangezogen werden.

2. Einrichtung nach Anspruch 1, **dadurch gekennzeichnet**, daß ein zusätzlicher Referenzozsillator vorgesehen ist, der mit den Abtastoszillatoren ggf. bis auf den Kondensator baugleich und räumlich so angeordnet ist, daß er den gleichen Umgebungsbedingungen ausgesetzt ist, wie die Abtastoszillatoren, daß die Amplitude der Schwingung des Referenzoszillators mittels einer Regelschaltung auf einem vorbestimmten Wert gehalten ist, und daß die Regelgröße der Regelschaltung zum Eleminieren des Einflusses der Umgebungsbedingungen auf die Amplitude der Abtastoszillatoren zur entsprechenden Steuerung dieser Amplitude herangezogen wird.

3. Einrichtung nach Anspruch 1 oder 2, **dadurch gekennzeichnet**, daß jedem Bit des Binärwortes eine eigene Codespur mit einem zugehörigen Abtastoszillator zugeordnet ist.

4. Einrichtung nach einem der vorhergehenden Ansprüche, **dadurch gekennzeichnet**, daß mehreren Bits des Binärwortes eine gemeinsame Code-Spur mit je einem Abtastoszillator für jedes Bit zugeordnet ist, wobei die Abtastoszillatoren im Abstand von mehreren Codeelementen entlang der Spur angeordnet sind.

5. Einrichtung nach einem der vorhergehenden Ansprüche, **dadurch gekennzeichnet**, daß jede Abtastspule einen Stiftkern aufweist, dem die Codeelemente liegend stirnseitig gegenüberstehen.

6. Einrichtung nach Anspruch 5, **dadurch gekennzeichnet**, daß die Abtastspulen in Bohrungen eines Blocks aus magnetisch leitendem Material angeordnet sind.

7. Einrichtung nach einem der Ansprüche 1 bis 4, **dadurch gekennzeichnet**, daß jede Abtastspule einen U-Kern umgibt und die Code-Elemente messerartig zwischen die freien Enden der Kernschenkel eingreifen.

8. Einrichtung nach Anspruch 7, **dadurch gekennzeichnet**, daß die Kerne der Abtastspulen nebeneinander in einem gemeinsamen, U-förmigen Träger aus magnetisch neutralem Material angeordnet sind, in den sie mit ihrem Steg eingreifen, und daß die Spulenwicklungen im Bereich der Kernstege über den gemeinsamen Träger gewickelt sind, der auch mit Anschlußstiften für die Spulenwicklungen versehen ist.

9. Einrichtung nach einem der vorhergehenden Ansprüche, **dadurch gekennzeichnet**, daß die Resonanzkreise der Abtastoszillatoren auf untereinander etwas verschiedene Frequenzen derart abgestimmt sind, daß eine Beeinflussung der jeweiligen Schwingungsamplitude durch benachbarte Spulen im wesentlichen eleminiert ist.

10. Einrichtung nach einem der Ansprüczhe 2 bis 9, **dadurch gekennzeichnet**, daß der Referenzspule eine zu den Code-Spuren parallele Spur zugeordnet ist, die durchgehend aus dem elektromagnetisch dämpfenden Material der Code-Spuren besteht und dem Spulenkern gegenübersteht.

11. Einrichtung nach einem der vorhergehenden Ansprüche, **dadurch gekennzeichnet**, daß für jedes Bit höherer als der niedrigsten Wertigkeit die Länge der dem einen Bitwert zugeordneten, elektromagnetisch neutralen Abschnitte um einen gleichen Bruchteil der Länge der diesem Bitwert zugeordneten neutralen Abschnitte beim Bit niedrigster Wertigkeit kleiner ist, wobei der Bruchteil so gewählt ist, daß der Einfluß der in Richtung der Spur benachbarten, dem anderen Bitwert zugeordneten dämpfenden Abschnitte bei allen Bits bei der Abtastung der gleiche ist.

12. Einrichtung nach einem der vorhergehenden Ansprüche, **dadurch gekennzeichnet**, daß bei einer Spur zur gleichzeitigen Abtastung beider Bitwerte zusätzlich zu der Abtastspule/den Abtastspulen eine weitere Abtastspule zugeordnet ist, daß die von einer der Abtastspulen und der weiteren Abtastspule gemessenen Schwingungsamplituden summiert werden und daß aus dem Summenwert ein Schwellwert für die Bestimmung der Bitwerte aus den von den Abtastspulen gemessenen Schwingungsamplituden gebildet wird.

13. Einrichtung nach einem der vorhergehenden Ansprüche, **dadurch gekennzeichnet**, daß die mit den Abtastspulen und ggf. der Referenzspule zusammenwirkende Elektronik in einer integrierten Schaltung zusammengefaßt ist.

Fig. 1

GRAY-Code (Bitbreite 0.43mm)

elektromagnetisch dämpfendes Material

Referenzspur mit darüber angeordneter Referenzspule

Code-Spuren mit jeweils darüber angeordneten Abtastspulen

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 820 110 (C.T.HENRICH; J.M.PIERCE) <br> * Spalte 2, Zeile 5 - Spalte 5, Zeile 55; Abbildungen * <br> * Spalte 6, Zeile 29 - Spalte 10, Zeile 58 * <br> --- | 1,7,8,13 | G01D5/249 <br> G01B7/02 <br> G01D5/20 |
| Y | GB-A-2 096 421 (A.G.HAY) <br><br> * das ganze Dokument * <br> --- | 1-4,7,8, 12,13 | |
| Y | EP-A-0 286 820 (PAV PRÄZISIONS-APPERATEBAU AG) <br><br> * Spalte 2, Zeile 34 - Spalte 3, Zeile 21 * <br> * Spalte 5, Zeile 6 - Spalte 6, Zeile 55; Ansprüche; Abbildungen 2,3 * <br> --- | 1-4,7,8, 12,13 | |
| A | GB-A-2 130 034 (THE PLESSEY COMPANY PLC) <br> * das ganze Dokument * <br> --- | 1,11 | |
| A | GB-A-2 067 295 (S.J.LUMBROSO) <br> * das ganze Dokument * <br><br> ----- | 1,2 | |
| | | | **RECHERCHIERTE SACHGEBIETE (Int. Cl.5 )** <br><br> G01D <br> G01B |

Der vorliegende Recherchenbericht wurde für alle Patentansprüche erstellt

| Recherchenort | Abschlußdatum der Recherche | Prüfer |
|---|---|---|
| DEN HAAG | 18 MAERZ 1992 | BROCK T.J. |